# EUROPÄISCHE PATENTANMELDUNG

(11) **EP 1 253 809 A2**
(43) Veröffentlichungstag der Anmeldung: **30.10.2002**
(21) Anmeldenummer: 02405341.5
(22) Anmeldetag: 25.04.2002
(51) Int. Cl.: H05B 39/04

(54) **Stellglied, Steuerung mit Stellglied und Verfahren zum Steuern für eine elektrische Last**

(30) Priorität: 27.04.2001 CH 774012001; 22.02.2002 CH 32002
(71) Anmelder: Kleger, Raymond, 8505 Pfyn (CH)
(72) Erfinder: Kleger, Raymond, 8505 Pfyn (CH)
(74) Vertreter: Gachnang, Hans Rudolf

(57) **Zusammenfassung**

Das Stellglied (1) zum Steuern einer elektrischen Last (17) umfasst zwei über ein Verbindungselement (7) antiseriell miteinander verbundene FETs (3,5). Das Stellglied (1) ist in einer Steuerung als schnelles Schalt- und/oder Sicherungselement mit geringer Verlustleistung einsetzbar. Über Bedientaster und einen Microcontroller ist die Leistungsaufnahme der Last (17) mit dem Stellglied (1) in unterschiedlicher Weise steuerbar.

## Beschreibung

Gegenstand der Erfindung ist ein Stellglied, eine Steuerung mit Stellglied, ein Verfahren zum Steuern einer elektrischen Last sowie eine Verwendung des Stellgliedes gemäss den Merkmalen der unabhängigen Patentansprüche 1, 4 bis 8 und 10.

Zum Steuern des Leistungsverbrauchs einer elektrischen Last wie beispielsweise einer Glühlampe oder einer elektrischen Heizung sind verschiedene Schalt- oder Steuermittel bekannt. So kann eine Glühlampe über einen einfachen, manuell oder automatisch betätigbaren Schalter mit einer Stromquelle verbunden oder von dieser getrennt werden. Die Leistungsaufnahme der Glühlampe wechselt dabei zwischen den Extremwerten Vollast und keine Last.

Es ist auch bekannt, die Leistungsaufnahme mittels eines Stell- oder Steuerglieds, beispielsweise mittels eines Dimmers, auf einen zwischen keiner Last und Vollast liegenden Zwischenwert einzustellen. Bei Wechselstromkreisen werden verbreitet elektronische Schaltungen eingesetzt, die als Steuer- oder Stellglieder Elemente mit Phasenanschnittsteuerung, also beispielsweise Thyristoren oder Triacs, verwenden.

Triacs und Thyristoren haben den Nachteil, dass sie bei einem Spannungsabfall von 2 bis 3 Volt eine relativ hohe Verlustleistung aufweisen. Die dynamischen Verluste sind bei Thyristoren, Triacs und IGBTs aufgrund der relativ langen Schaltzeiten ziemlich hoch. Im Betrieb tritt eine relativ hohe Wärmeentwicklung auf. Zum Abführen der Wärme sind Kühlkörper erforderlich, die zusätzlich Platz benötigen und die Kosten erhöhen. Ein weiterer Nachteil bei Triacs und Thyristoren liegt darin, dass der regeloder steuerbare Leistungsbereich eine vergleichsweise hohe Untergrenze aufweist. Sie liegt bei herkömmlichen Dimmern etwa bei 40W. Ausserdem sind herkömmliche Dimmer in der Regel mit auswechselbaren Schmelzsicherungen zum Schutz gegen Kurzschlüsse gesichert. Nachteilig wirkt sich bei solchen Sicherungen nicht nur der erhöhte Platzbedarf aus, sondern auch die Tatsache, dass nach dem Durchbrennen einer Schmelzsicherung oft keine geeignete Ersatzsicherung verfügbar ist.

Es ist Aufgabe der vorliegenden Erfindung, ein Stellglied, eine Steuerung mit einem Stellglied und ein Verfahren zum Steuern einer elektrischen Last zu schaffen, bei denen das Stellglied vergleichsweise wenig Platz beansprucht und vergleichsweise geringe Verlustleistungswerte aufweist. Eine weitere Aufgabe der Erfindung liegt darin, ein Stellglied mit Überlast- bzw. Kurzschlussschutz und mit geringen Emissionswerten zu schaffen.

Diese Aufgaben werden gelöst durch ein Stellglied, eine Steuerung mit einem Stellglied und ein Verfahren gemäss den Merkmalen der unabhängigen Patentansprüche 1, 4 bis 8 und 10.

Vorteilhaft beim erfindungsgemässen Stellglied und der erfindungsgemässen Steuerung ist die schnelle Schaltzeit und die vergleichsweise geringe dynamische und statische Verlustleistung. Sie kann mit einfachen Mitteln, beispielsweise über metallisierte Flächen auf einer Leiterplatte, abgeführt werden. Dies ist selbst dann noch möglich, wenn das Stellglied oder die Steuerung in einen knapp bemessenen Raum mit geringer Wärmeableitung eingebaut ist.

Eine vorteilhafte Ausgestaltung der Steuerung mit dem Stellglied beansprucht so wenig Platz, dass sie in eine Abzweigdose oder in eine Einlassdose für eine Schalter-Steckdosen-Kombination einsetzbar ist.

Eine weitere vorteilhafte Ausgestaltung der Steuerung umfasst eine potentialgebundene Speisung. Dadurch können Bauteile, Platz und Kosten eingespart werden.

Ausserdem sind geeignete Mittel vorgesehen, die Störemissionen, wie sie insbesondere beim schnellen Schalten von Transistoren und Power MOSFETs auftreten, vermindert werden können.

Die Ansteuerung der Transistoren des Steuergliedes kann über eine einzige, gemeinsame Steuerspannungsquelle erfolgen, lässt sich also sehr einfach aufbauen.

Bei einer weiteren vorteilhaften Ausgestaltung der erfindungsgemässen Steuerung übernimmt ein Prozessor oder Microcontroller Aufgaben wie Kurzschluss-Schutz oder Überwachung eines Bedientasters mit Mehrfachfunktionen. Darunter fallen beispielsweise bei einer Dimmersteuerung das schonende Einschalten von Glühlampen mit einer Softstartfunktion oder das Speichern und Abrufen von Dimmwerten und/oder -zeiten.

Ein weiterer Vorteil des Stellgliedes liegt darin, dass es über herkömmliche Impulstaster angesteuert werden kann, wobei auch Impulstaster mit Glimmlampen parallel zum Taster oder Kontakt einsetzbar sind.

Am Beispiel einer Dimmersteuerung wird Erfindung anhand einiger Figuren im folgenden näher beschrieben. Dabei zeigen
- Figur 1: einen Ausschnitt des Schaltschemas des Dimmers mit einem Stellglied,
- Figur 2: eine schematisch dargestellte An- und Aufsicht des Dimmers,
- Figur 3: ein Anschlussschema des Dimmers,
- Figur 4: eine schematisch dargestellte Aufsicht auf einen Ausschnitt einer bestückten Leiterplatte des Dimmers,
- Figur 5: ein Schaltschema einer ersten Ausgestaltung des Dimmers,
- Figur 6: ein Schaltschema einer zweiten Ausgestaltung des Dimmers.

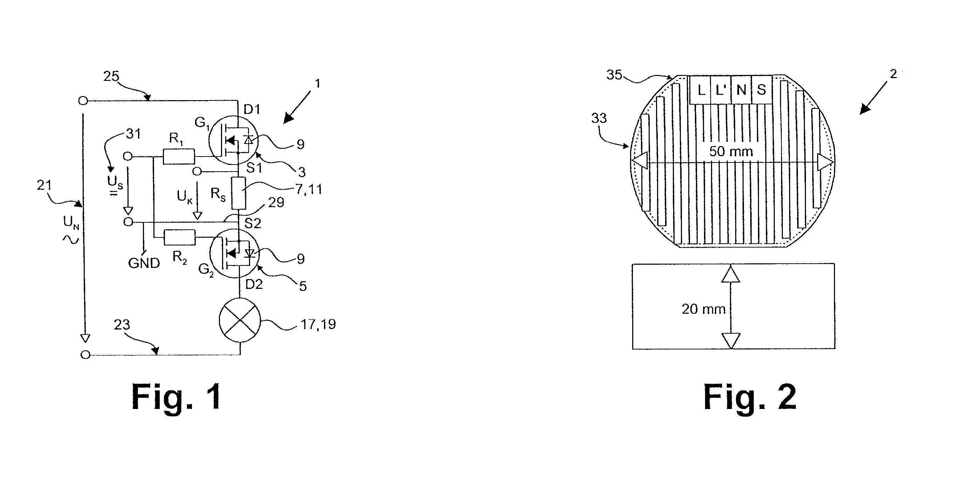

In Figur 1 ist ein Ausschnitt aus dem Schaltschema einer Steuerung oder eines Dimmers 2 mit einem Stellglied 1 dargestellt. Das Stellglied 1 umfasst einen ersten Feldeffekttransistor, kurz erster FET 3 genannt und einen zweiten Feldeffekttransistor, kurz zweiter FET 5 genannt. Die beiden FETs 3,5 sind N-Kanal-Power-MOSFETs, die antiseriell über ein elektrisch leitendes Verbindungselement 7 miteinander verbunden sind. Das heisst, entweder sind die beiden Source-Anschlüsse S1 und S2 - wie in Figur 1 dargestellt - oder die beiden Drain-Anschlüsse D1 und D2 der beiden FETs 3,5 über das Verbindungselement 7 miteinander verbunden.

Alternativ könnten auch P-Kanal-Power-MOSFETs eingesetzt werden. N-Kanal-Power-MOSFETs umfassen oft eine parallel geschaltete Diode 9 zwischen Source- und Drain-Anschluss, wobei die Anode beim Source-Anschluss liegt. Analog liegt bei P-Kanal-Power-MOSFETs die Kathode beim Source-Anschluss. Bei antiserieller Schaltung der beiden FETs 3,5 sind demzufolge die Dioden 9 der beiden FETs 3,5 ebenfalls antiseriell geschaltet, haben also entgegengesetzte Polarität.

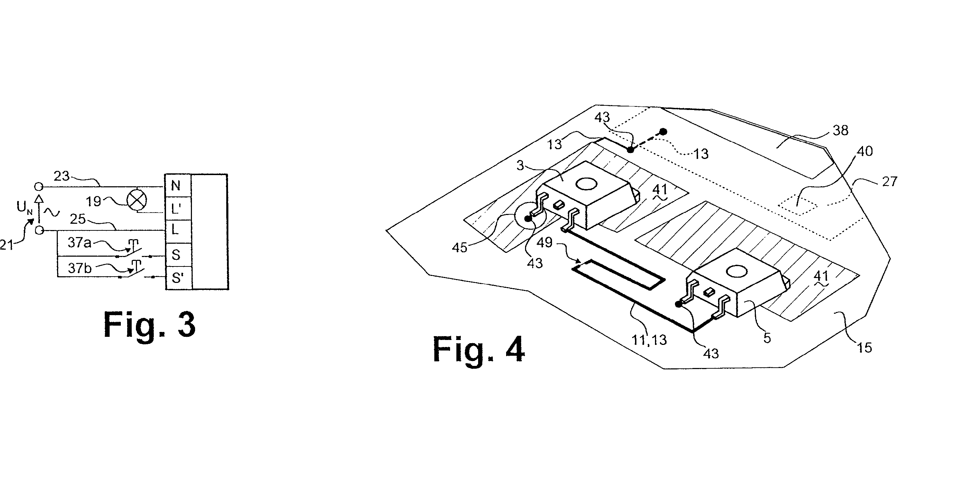

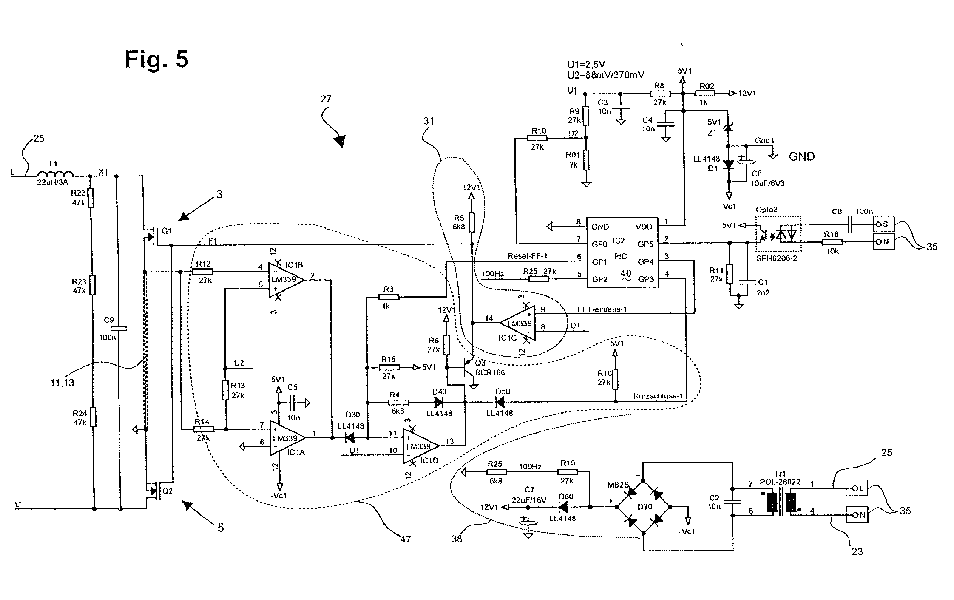

Das Verbindungselement 7 kann ein kleiner Shunt oder Messwiderstand 11 sein, dessen Wert so bemessen ist, dass der Spannungsabfall unter normalen Betriebsbedingungen in der Grössenordnung von etwa 20 bis 100 Millivolt liegt. Beispiele solcher Messwiderstände 11 sind Draht-, Plattenoder Schichtwiderstände. Alternativ kann das Verbindungselement 7 auch eine Leiterbahn 13 auf einer Leiterplatte 15 sein, wie dies in den Figuren 4 und 5 dargestellt ist. Diese Variante ist wesentlich kostengünstiger. Ebenso können die beiden FETs 3,5 gemeinsam auf einem einzigen Chip integriert und elektrisch miteinander verbunden sein. Ausserdem können bei einer vorteilhaften Ausgestaltung die Gates optisch mit einer galvanisch getrennten Steuerspannung angesteuert werden.

Das Stellglied 1 ist in Serie mit einer elektrischen Last 17, beispielsweise einer Glühlampe 19, in einen Stromkreis mit einer Wechselstromquelle 21 geschaltet. Die Glühlampe 19 ist mit dem Neutralleiter 23 der Wechselstromquelle 21 und mit dem Drain-Anschluss D2 des zweiten FET 5 verbunden. Der Drain-Anschluss D1 des ersten FET 3 ist mit dem Aussen- oder Polleiter 25 der Wechselstromquelle 21 verbunden. Neutral- und Polleiter 23,25 können auch vertauscht sein.

Das Ground-Potential, kurz GND, einer Steuerelektronik 27 - ersichtlich aus Figur 5 - ist aufgrund einer galvanischen Verbindung 29 mit dem Spannungspotential am Source-Anschluss S2 des zweiten FET 5 identisch. Alternativ könnte GND auch galvanisch mit dem Source-Anschluss S1 des ersten FET 3 verbunden werden.

Das Gate G1 des ersten FET 3 ist über einen ersten Ansteuer-Widerstand R1 mit einer Steuerspannungsquelle 31 der Steuerelektronik 27 verbunden. Das Gate G2 des zweiten FET 5 ist über einen zweiten Ansteuer-Widerstand R2 mit der Steuerspannungsquelle 31 verbunden. Anstelle oder zusätzlich zu den Ansteuer-Widerständen R1 und R2 könnten auch Leiterbahnen 13 oder andere elektronische Bauteile eingesetzt werden.

Anstelle der gemeinsamen Steuerspannungsquelle 31 könnten auch verschiedene Steuerspannungsquellen 31 mit den Gates G1 und G2 der beiden FETs 3,5 verbunden sein. Die Steuerspannungen Uₛ der Steuerspannungsquellen 31 sind veränderlich. Vorzugsweise haben diese Spannungen Uₛ denselben Wert oder mindestens dieselbe Polarität.

In Figur 2 ist eine vorteilhafte Ausgestaltung des Dimmers 2 in An- und Aufsicht dargestellt. Das Dimmergehäuse 33 hat ungefähr die Gestalt einer Zylinderscheibe mit zwei gegenüberliegenden Abplattungen an der Mantelfläche. Mit einem Durchmesser von etwa 50mm und einer Höhe von ungefähr 20mm kann der Dimmer 2 in Abzweigdosen und/oder in Einlassdosen für Schalter/Steckdosen eingebaut werden.

Solche Dosen haben beispielsweise einen Innendurchmesser von ungefähr 60mm. Zum Herstellen der elektrischen Verbindungen sind vier Anschlussklemmen 35 mit den Bezeichnungen "L", "L' ", "N" und "S" von der Aussenseite des Dimmergehäuses 33 her zugänglich. Die Anschlussklemme 35 mit der Bezeichnung "N" ist nicht zwingend erforderlich. Zusätzlich oder anstelle dieses Anschlusses können weitere Anschlussklemmen 35 vorgesehen sein.

In Figur 3 ist ein beispielhaftes Anschlussschema des Dimmers 2 dargestellt. Die Betriebsspannung U_{N} der Wechselstromquelle 21 ist mit dem Neutralleiter 23 bei "N" und mit dem Polleiter 25 bei "L" angeschlossen. Als Last 17 ist die Glühlampe 19 mit dem Neutralleiter 23 und mit "L' " verbunden. Zwei Steuereingänge "S" und "S' " können über Impulstaster oder Taster 37a, 37b kurzzeitig mit dem Polleiter 25 verbunden werden.

In Figur 4 ist ein Ausschnitt der bestückten Leiterplatte 15 des Dimmers 2 mit der Steuerelektronik 27, den beiden FETs 3,5 skizziert. Die Steuerelektronik 27 ist nur andeutungsweise dargestellt und kann beispielsweise ein Netzteil 38 zum Erzeugen der von der Elektronik benötigten Klein- oder Betriebsspannung, beispielsweise +5V und/oder +12V, und einen Microcontroller 40 umfassen. Die Erzeugung der Betriebsspannung erfolgt potentialfrei durch das Netzteil 38. Die Steuerelektronik 27 kann ganz oder teilweise auf einer oder mehreren Leiterplatten 15 angeordnet sein. Zum Beispiel kann das Netzteil 38 zusammen mit den Anschlussklemmen 35 und den beiden FETs 3,5 auf der Vorderseite der Leiterplatte 15 angeordnet sein, während der Microcontroller 40 und/oder andere elektronische Bauteile auf der Rückseite der Leiterplatte 15 angeordnet sind. Leiterbahnen 13 auf der Vorderseite und der Rückseite der Leiterplatte 15 können über Durchkontaktierungen 43 miteinander verbunden sein. Die Leiterplatte 15 kann beispielsweise über Jumper oder Flachbandkabel mit weiteren Leiterplatten 15 verbunden sein (in Figur 4 nicht dargestellt). In Figur 5 ist das Schaltschema einer ersten Ausgestaltung des Dimmers dargestellt. Daraus ist ersichtlich, dass das Netzteil 38 über Leiterbahnen 15 mit den Anschlussklemmen 35 für den Polleiter 25 und den Neutralleiter 23 verbunden ist. Ausserdem kann der Microcontroller 40 über elektronische Bauteile und/oder Verbindungsleiter mit den Anschlüssen "S" und/oder "S' " verbunden sein und Steuersignale von aussen erkennen. Ausgangsseitig kontrolliert der Microcontroller 40 einen Ansteuerteil, der mit den Gates G1 und G2 der beiden FETs 3,5 verbunden ist und als Steuerspannungsquelle 31 die Steuerspannung Uₛ erzeugt.

Ist die Steuerspannung Uₛ genügend klein oder liegt keine Steuerspannung Uₛ an, so sind die beiden FETs 3,5 gesperrt. Obwohl jeder der beiden FETs 3,5 aufgrund der eingebauten Dioden 9 bei Wechselstrom nur jeweils eine Halbwelle sperren kann und für die andere Halbwelle durchlässig ist, kann kein Strom fliessen. Der Grund liegt darin, dass die Dioden 9 antiseriell geschaltet sind. Ist eine Diode 9 für eine Halbwelle durchlässig, so sperrt die jeweils andere Diode 9 diese Halbwelle.

Wird die Steuerspannung Uₛ langsam erhöht, beginnt ab einer unteren Grenzspannung der Durchlasswiderstand der FETs 3,5 zu sinken und es beginnt ein Durchlassstrom zu fliessen. Übersteigt die Steuerspannung Uₛ eine obere Grenzspannung, beispielsweise 8 bis 12 V, so sind die beiden FETs 3,5 voll durchgesteuert. Der Durchlasswiderstand ist minimal.

Im Normalbetrieb werden die beiden FETs 3,5 voll durchgesteuert oder gesperrt. Der Stromfluss und somit die von der angeschlossenen elektrischen Last 17 aufgenommene oder abgegebene Leistung wird mit einer Phasenanschnittoder Phasenabschnittsteuerung durch den Microcontroller 40 beeinflusst. Dabei werden die FETs 3,5 innerhalb der Wechselspannungszyklen oder -halbzyklen der Wechselstromquelle 21 für einen Bruchteil der Zyklen, der im Bereich von 0% bis 100% liegen kann, gesperrt und für den Rest der Zyklen oder Halbzyklen voll durchgeschaltet. Die Sperrung der FETs 3,5 kann am Anfang oder am Ende der Zyklen oder Halbzyklen erfolgen. Selbstverständlich sind auch andere Varianten der Ansteuerung der FETs 3,5 möglich, z.B. Pulspaket-Steller, bei denen ganze SinusSchwingungen im Spannungs-Nulldurchgang eingeschaltet und im Strom-Nulldurchgang ausgeschaltet werden, wobei eine oder mehrere Sinusschwingungen als Pakete geschaltet werden können. Eine andere Alternative wäre beispielsweise eine Pulsfolgesteuerung, bei der die ursprüngliche Sinuskurve als Hüllkurve dient.

Im durchgeschalteten Zustand ist die Durchlassspannung U_{SD} bei einem Strom von Source nach Drain kleiner als die Diodenschwellspannung. Der Spannungsabfall U_{SD} über dem Durchschaltwiderstand jedes der beiden FETs 3,5, kurz R_{SDon} genannt, gehorcht dem Ohmschen Gesetz U_{SD} = I x R_{SDon}. Beim jeweils anderen FET 3,5 fliesst der Strom von Drain nach Source. Die zugehörige Diode 9 sperrt und der Spannungsabfall U_{DS} ergibt sich ebenfalls nach dem Ohmschen Gesetz.

Während in Gleichstromanwendungen der Strom bei N-Kanal-FETs immer vom Drain- zum Source-Anschluss fliesst, ist die Stromrichtung bei antiseriell geschalteten FETs 3,5 unwesentlich, d.h. die Schaltung kann auch für

Wechselstrom-Anwendungen eingesetzt werden.

Die Verlustleistung der beiden FETs 3,5 ist im Vergleich zu herkömmlichen Schaltmethoden gering. Der Spannungsabfall bei einem Triac oder Thyristor beträgt rund 2 bis 3 Volt. Bei einer Schaltung, wie sie in Figur 1 dargestellt ist, muss lediglich mit einem Spannungsabfall von insgesamt etwa 400 Millivolt über den beiden FETs 3,5 gerechnet werden. Die Verlustleistung ist proportional zu I² x R, also proportional zum Quadrat des fliessenden Stromes. Die mit der Verlustleistung verbundene Wärmeentwicklung ist bei Power-MOSFETs wesentlich geringer als bei Triacs oder Tyhristoren. Zum Abführen der Wärme können schon kleine Kühlflächen, beispielsweise auf der Leiterplatte 15 oder dem Print aufgebrachte Kupferflächen 41 oder Leiterbahnen 13 ausreichend sein. Grosse Kühlkörper sind in der Regel nicht erforderlich. Wärmeabführende und/oder elektrisch abschirmende Kupferflächen 41 können sich beispielsweise zusammen mit den FETs 3,5 auf der Vorderseite der Leiterplatte 15 befinden. Die Anschlüsse der FETs 3,5 sind über Bohrungen oder Durchkontaktierungen 43 mit Leiterbahnen 13 auf der Rückseite der Leiterplatte 15 verbunden. Nicht metallisierte Kontaktbereiche 45 verhindern unerwünschte Kontakte mit der Kupferfläche 41. Die Steuerelektronik 27 ist ebenfalls auf der Rückseite angeordnet.

In Figur 5 ist das Schaltschema einer vorteilhaften Ausgestaltung der Steuerung oder des Dimmers 2 dargestellt. Die Steuerung umfasst die Steuerelektronik 27 und eine mit dem Messwiderstand 11 und dem Microcontroller 40 verbundene Überwachungs- oder Auswerteeinheit 47. Als Messwiderstand 11 dient eine dünne Leiterbahn 13 mit etwa 20mm Länge und 0.4mm Breite und einem Widerstand von etwa 33 mOhm; dies sind sinnvolle Werte für einen Nennstrom von 1 A_{eff}. Sowohl Länge wie Breite der Bahn können variieren. Die am Messwiderstand 11 abfallende Spannung wird über zwei Komparatoren IC1A und IC1B in Bezug zu einer Referenzspannung U2 gesetzt. Diese Referenzspannung U2 ist durch die Widerstände R8, R9, R10 und R01 sowie die Speise- oder Betriebsspannung von 5V und den Zustand des Ausgangs GP0 des Microcontrollers 40 festgelegt. Übersteigt der Strom durch den Messwiderstand 11 z.B infolge Anschliessens einer zu grossen Last 17 oder eines Kurzschlusses einen Grenzwert, so wird - je nach Polung der Halbwelle - einer der beiden Komparatoren IC1A oder IC1B durchgesteuert. IC1D arbeitet als Flip-Flop und steuert aufgrund des negativen Impulses an der Diode D30 ebenfalls durch. Die Gates G1 und G2 der beiden FETs 3,5 werden schlagartig entladen, sodass die Stromzufuhr zur Last 17 innerhalb weniger Mikrosekunden nach dem Auftreten der Störungsursache unterbrochen wird. Aufgrund des Signals am Eingang GP3 erkennt der Microcontroller 40 den Kurzschluss oder die Überlast und steuert den als sog. Levelshift eingesetzten Komparator IC1C durch. Der Ausgang des IC1C kommt so auf die gegenüber dem GND-Potential leicht negative Bezugsspannung -Vc1 des IC1 zu liegen. Der Vorteil der negativen Bezugsspannung -Vc1 liegt darin, dass der 4-fach Komparator IC1 auch leicht negative Spannungen über dem Messwiderstand 11 sicher verarbeiten kann. Selbstverständlich könnte als Bezugspotential alternativ auch das GND-Potential genutzt werden.

IC1C ist Bestandteil der Steuerspannungsquelle 31 und wandelt ein 5V-Ausgangs-Signal des Microcontrollers 40 in ein 8V bis 12V-Signal um, das zum völligen Durchsteuern der FETs 3,5 erforderlich ist. Als FETs 3,5 können Power-MOSFETs wie beispielsweise COOL MOS-Typen von Siemens eingesetzt sein.

Etwa 5s nach dem Sperren der FETs 3,5 im Falle eines Kurzschlusses, einer Überlast oder eines Überstroms gibt der Microcontroller 40 die FETs 3,5 wieder frei, indem er über den Ausgang GP1 ein Reset-Signal an IC1D ausgibt. Der Strom steigt durch den Messwiderstand 11 wieder an. Der ganze Vorgang wiederholt sich solange, bis der Kurzschluss oder die Überlast beseitigt ist. Anschliessend ist das einwandfreie Funktionieren der Steuerung mit der Last 17 ohne weitere Massnahme wieder möglich.

Da beim Einschalten einer Glühlampe 19 der Einschaltstrom wesentlich höher ist, als im stationären Betriebszustand, erhöht der Microcontroller 40 beim Einschalten während ungefähr 1s die Referenzspannung U2 für die Komparatoren IC1A und IC1B. Dazu wird der Ausgang GP0 kurzzeitig auf +5V gelegt.

Aufgrund der sehr schnellen Reaktionszeit kann die Auswerteeinheit 47 der Steuerung auch autonom als ultraschnelles Schalt- oder Sicherungselement für Wechselstrom eingesetzt werden, indem sie durch eine einfache FET-Ansteuerung ergänzt wird.

Anstelle oder zusätzlich zum Messwiderstand 11 oder der dünnen Leiterbahn 13 kann eine Dünnstelle 49 oder Sollbruchstelle in einer Leiterbahn 13 ebenfalls eine Kurzschlusssicherung sein, beispielsweise ein kleines Leiterbahnstück mit geringerem Leiterbahn-Querschnitt in der die beiden Source-Anschlüsse S1 und S2 verbindenden Leiterbahn 13. Wenn die FETs 3,5 nicht sperren, weil sie beispielsweise defekt sind oder weil keine Ansteuerelektronik vorhanden ist, wird die Dünnstelle 49 bei zu hohem Strom heiss und schmilzt. Falls keine Dünnstelle 49 vorhanden ist, schmilzt die dünne Leiterbahn 13 zwischen den beiden Source-Anschlüssen ebenfalls, aber weniger kontrollierbar.

Die Ansteuerung der FETs 3,5 durch den Microcontroller 40 erfolgt synchron mit dem Takt der Wechselstromquelle 21. Die Nulldurchgänge werden vom Microcontroller 40 durch Auswertung des 100Hz-Wechselspannungs-Signals nach dem Graetz-Gleichrichter D70 des Netzteils 38 bestimmt.

Aus Figur 5 ist ausserdem ersichtlich, wie die Ankoppelung von Bedienungstastern 37a oder 37b potentialgetrennt über einen Optokoppler OPTO2 erfolgen kann. Durch den kapazitiven Spannungsteiler auf der Tasterseite kann bei einer Spannung von 230VAC ein Strom von etwa 7mA fliessen. Somit können auch Taster 37a,37b mit eingebauter Glimmlampe eingesetzt werden. Mehrere solcher Taster 37a,37b mit Glimmlampe können auch parallel betrieben werden. Die Anzahl hängt von der Dimensionierung des kapazitiven Spannungsteilers und vom Glimmstrom ab. Der Glimmstrom ist in der Regel kleiner als 1mA. Die Ankopplung von Tastern 37a,37b ohne Glimmlampe könnte selbstverständlich auch über einen ohmschen Spannungsteiler mit einem wesentlich kleineren Strom von z.B. 1mA erfolgen. Beliebig viele solcher Taster 37a,37b können parallel geschaltet werden.

Die Steuerung oder der Dimmer 2 kann von aussen über die Taster 37a und 37b an den Steuereingängen "S" und/oder "S' " (dargestellt in Figur 4) gesteuert werden. Am Eingang GP5 des Microcontrollers 40 wird der Status des Tasters 37a abgefragt. Der Microcontroller 40 wertet die Tasterbetätigungen aus und steuert unter anderem die FETs 3,5 aufgrund der über die Taster 37a,37b erhaltenen Befehle. Je nach Art der Tasterbetätigung führt der Microcontroller 40 unterschiedliche Aktionen aus.

Mit je einem kurzen Druck auf den ersten Taster 37a innerhalb eines durch diese Tasterbetätigung gestarteten Abfrage-Zeitfensters von beispielsweise 0.2s oder 0.5s Dauer kann die am Dimmer 2 angeschlossene Glühlampe 19 ein- und ausgeschaltet werden. Beim Einschalten wird der gleiche Dimmwert eingestellt, der unmittelbar vor dem letzten Ausschalten eingestellt war. D.h. die Dimmersteuerung umfasst ein Speichermedium, beispielsweise den Microcontroller 40 oder ein EEPROM, in dem der jeweilige Dimmwert gespeichert werden kann. Beim Einschalten kann ein sog. Softstart, d.h. ein Steigern der Helligkeit der Glühlampe 19 von minimaler Leistung bis zum jeweiligen Dimmwert vorgesehen sein, beispielsweise mit einer Steigerungsrate von 50% des nutzbaren Leistungsbereichs pro Sekunde. Dadurch kann sich die Lebensdauer einer Glühlampe 19 oder einer Halogenlampe wesentlich erhöhen. Selbstverständlich können auch mehrere Glühlampen 19 parallel an den Dimmer 2 angeschlossen sein, solange die maximal zulässige Leistung nicht überschritten wird. Die gesamte angeschlossene Last 17 muss innerhalb eines steuerbaren Bereichs von minimal etwa 15W und maximal - je nach Ausführung der Steuerung - beispielsweise 300W, 600W oder 1000W liegen.

Wird der erste Taster 37a länger als ca. 0.5s betätigt, so regelt oder steuert der Microcontroller 40 die FETs 3,5 derart, dass sich die Leistungsabgabe der Glühlampe 19 langsam bis zum Maximalwert bei voll durchgesteuerten FETs 3,5 erhöht und anschliessend wieder langsam bis zu einem Minimalwert absinkt. Dieser Prozess wiederholt sich bei gedrücktem erstem Taster 37a zyklisch mit einer Änderungsrate von beispielsweise 20% des nutzbaren Leistungsbereichs pro Sekunde. Durch erneutes langes Drücken kehrt der Vorgang um.

Ist die Glühlampe 19 ausgeschaltet, so werden die FETs 3,5 durch zweimaliges kurzes Drücken des ersten Tasters 37a innerhalb des Abfrage-Zeitfensters sofort voll angesteuert, sodass die Glühlampe 19 maximale Helligkeit abstrahlt. Der gespeicherte letzte Dimmwert wird dabei nicht überschrieben und bleibt erhalten. Selbstverständlich liesse sich auch hier ein Softstart programmieren. Ebenso könnte die den Dimmwert erhaltende Umschaltung auf maximale Helligkeit auch bei gedimmter Glühlampe 19 abrufbar sein.

Bei dreimaligem Drücken des ersten Tasters 37a innerhalb des Abfrage-Zeitfensters von etwa 0.5s wechselt die Steuerung zu einem Lernmodus zum Einstellen von Hochlaufund Ablaufdauer oder -zeit für den vollen Steuerbereich. Die Dauer, während der der Taster 37a beim dritten oder eventuell auch erst beim vierten Tasterdruck gedrückt gehalten wird, entspricht der neuen Hochlaufdauer und wird im Speicher der Steuerung hinterlegt. Anschliessend kann in gleicher Weise die Ablaufdauer eingestellt und gespeichert werden. Die Hochlauf- und Ablaufdauer kann je bis zu zwei Minuten dauern. Danach wechselt die Steuerung automatisch wieder in den normalen Betriebsmodus. Selbstverständlich könnten solche Steuerparameter auch in anderer Weise an die Steuerung mitgeteilt werden.

Der zweite Taster 37b hat eine reine Schaltfunktion. Durch kurzes Drücken des zweiten Tasters 37b wird die Glühlampe 19 eingeschaltet und auf den gespeicherten Dimmwert eingestellt oder - bei erneutem Drücken des zweiten Tasters 37b - wieder ausgeschaltet. Auch dieser zweite Taster 37b kann die Einstellung maximaler Helligkeit durch zweimaliges kurzes Drücken bewirken. Es ist aber keine Beeinflussung des Dimmwertes und der Hochlauf- und Ablaufdauer möglich.

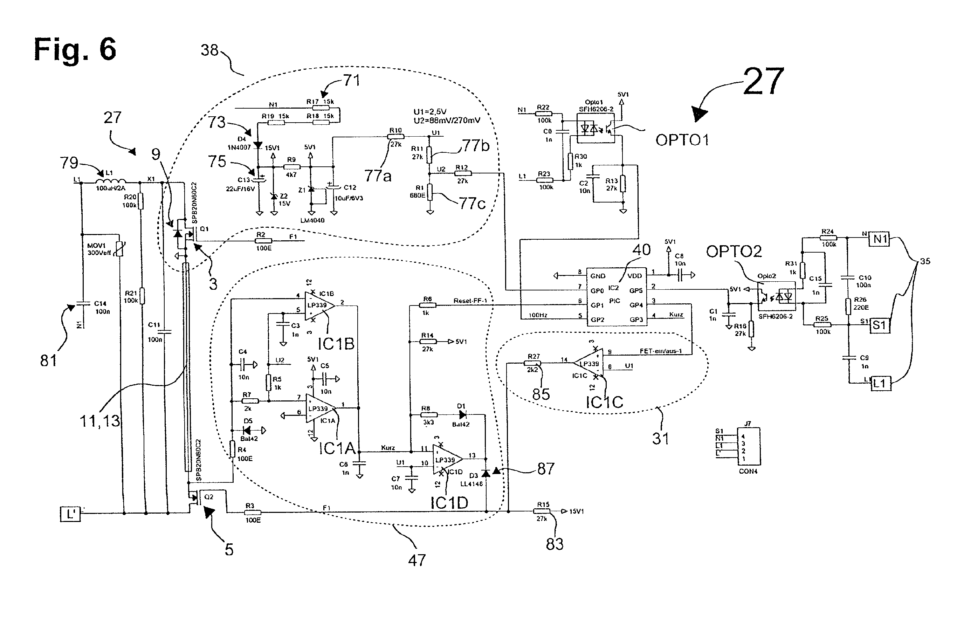

Alternativ zum in Figur 5 dargestellten Schaltschema ist in Figur 6 das Schaltschema einer zweiten Ausgestaltung des Dimmers dargestellt. Anstelle eines potentialfreien Netzteils 38 ist hier ein potentialgebundenes Netzteil 38 zur Speisung der Steuerelektronik 27 eingesetzt: Über einen Ladewiderstand 71, der aus mehreren in Serie angeordneten Widerstandselementen zusammengesetzt sein kann, ist der Neutralleiter N1 mit der Anode einer Ladediode 73 verbunden. Zwischen der Kathode der Ladediode 73 und dem das GND-Bezugspotential festlegenden Source-Anschluss des ersten FET 3 ist ein Ladekondensator 75 parallel zu einer Zenerdiode angeordnet. Diese Zenerdiode definiert die höchste der Betriebsspannungen für die Steuerelektronik 27, beispielsweise 15.1V. Ausgehend von dieser höchsten Betriebsspannung können in analoger Weise weitere, tiefere Betriebsspannungen erzeugt und stabilisiert werden, beispielsweise 5,1V. Stabilisierte Betriebsspannungen können mittels nachgeschalteter Spannungsteiler weiter reduziert oder direkt als Referenzspannungen genutzt werden. Die drei Widerstände 77a, 77b, 77c bilden einen zweifachen Spannungsteiler, wobei im vorliegenden Beispiel aus der 5,1-Volt-Betriebsspannung die beiden Referenzspannungen U1=2.5V und U2= 0.088V bzw. 0.27V gebildet werden.

Die Funktionsweise des in Figur 6 dargestellten Netzteils 38 wird nachfolgend kurz beschrieben: Die Ladediode 73 und die Diode 9 des ersten FET 3 bilden in Verbindung mit dem Ladekondensator 75 einen Halbwellengleichrichter. Anstelle einer in den FET 3 integrierten Diode 9 kann auch eine nicht integrierte Diode 9 denselben Zweck erfüllen. Die positive Halbwelle am Neutralleiter N1 lädt den Ladekondensator 75 über die Ladediode 73 auf. Der Ladestromkreis wird über den ersten FET 3 geschlossen, da der Drain-Anschluss des ersten FET 3 über eine Entstörspule 79 mit dem Polleiter L1 verbunden ist. Bei durchgeschaltetem erstem FET 3 fliesst der Strom über dessen leitenden Kanal, bei gesperrtem erstem FET 3 jedoch über dessen Diode 9. Für die negative Halbwelle liegt die Ladediode 73 in Sperrrichtung. Das GND-Bezugspotential hat annähernd den Wert des Polleiter-Potentials und weist bezüglich diesem nur geringfügige Schwankungen auf. Dadurch kann die störende Wirkung parasitärer Kapazitäten auf die Steuerelektronik 27 stark vermindert oder verhindert werden.

Die Steuerelektronik 27 umfasst Mittel zur Minimalhaltung von Störspannungen und Störstrahlungen, die beispielsweise durch die schnellen Schalteigenschaften der FETs 3,5 auf das Stromnetz übertragen werden könnten: Ein LC-Filter, umfassend einen Entstörkondensator 81 und die Entstörspule 79 als Verbindung zum Polleiter L1, sowie ein Kondensator zwischen den Drain-Anschlüssen der beiden FETs 3,5 verhindern oder dämpfen die Übertragung von Störungen auf die Netzspannung. Solche Störungen könnten andernfalls in Gestalt von Oberwellen im Langwellen- bis Kurzwellenbereich auf die Netzspannung übertragen werden.

Die beiden Gates der FETs 3,5 werden über einen Widerstand 83 von beispielsweise 27 kOhm an eine höhere Betriebsspannung von z.B. 15.1V gebunden, sofern IC1C durch Sperren seines Open-Collector-Ausgangstransistors die Einschaltung der FETs 3,5 freigibt. Die Flankensteilheit (Slewrate) bei der Einschaltung der FETs 3,5 wird durch den hohen Wert des Widerstandes 83 beschränkt. Dieser kann in Verbindung mit den Gate-Kapazitäten der FETs 3,5 und/oder mit weiteren (nicht dargestellten) Kapazitäten eine Tiefpasscharakteristik aufweisen. Da die Einschaltung der FETs 3,5 im Phasen-Nulldurchgang erfolgt, bleiben Umschaltverluste aufgrund der geringen Flankensteilheit auf ein unkritisches Niveau begrenzt. Im gesperrten Zustand der FETs 3,5, wenn der IC1C den Widerstand 85 auf Masse zieht, ist der Stromverbrauch gering.

Die Sperrung der FETs 3,5 erfolgt im Normalfall z.B beim Ausschalten oder beim Triggern des Phasenabschnittes für eine an den Dimmer angeschlossene Last 17 dadurch, dass IC1C die Gates der FETs 3,5 über einen Widerstand 85 von beispielsweise 2,2 kOhm, nach Masse bzw. das GND-Potential zieht. Der Widerstand 85 begrenzt dabei die Slewrate entscheidend und vermindert damit Störungen auf dem Starkstromnetz. Diese Massnahme ist äusserst wirksam, um übermässige Störungen im Langwellenbereich ab ca. 150 kHz bis in den Kurzwellenbereich zu verringern. Im Ausnahmefall, z.B. bei Überlast oder bei einem Kurzschluss im über die beiden FETs 3,5 geführten Stromkreis, können die beiden FETs 3,5 trotzdem innerhalb weniger Mikrosekunden und somit im Anfangsbereich der ersten Halbwelle mit Überlast ausgeschaltet werden:

Ein übermässig hoher Strom wird durch die beiden Komparatoren IC1A und IC1B erkannt, wobei jeder der beiden Komparatoren je eine Halbwelle überwacht. Eine Hilfsspannung U2, die z.B. 0.088V beträgt, liegt beim IC1A über einen Widerstand von z.B. 1kOhm und beim IC1B direkt am nicht invertierenden Eingang an. Der invertierende Eingang von IC1A liegt auf dem GND-Bezugspotential. Die Spannung über dem Messwiderstand 11 hat je nach Halbwelle unterschiedliche Polarität. Sie wird über einen Widerstand von beispielsweise 100Ohm direkt dem invertierenden Eingang des IC1B und zusätzlich über einen Widerstand von z.B. 2kOhm dem nicht invertierenden Eingang des IC1A zugeführt. Eine Schottky-Diode zwischen diesem Eingang und dem GND-Bezugspotential begrenzt den Betrag bei negativen Spannungswerten auf einen Wert, der unterhalb der Schwellspannung einer Siliziumdiode liegt, sodass IC1, der nur mit einer positiven Betriebsspannung arbeitet, in keinen unerwünschten Betriebszustand gerät oder gar zerstört wird. Unterschreitet die Spannung am nicht invertierenden Eingang des IC1A den zugehörigen Referenzwert (GND-Potential), so wird der Open-Collector-Ausgang des IC1A auf das GND-Potential geschaltet. In analoger Weise schaltet der Ausgang des IC1B auf das GND-Potential, wenn der Spannungswert am invertierenden Eingang den zugehörige Referenzwert am nicht invertierenden Eingang übersteigt. Als Folge kippt der als RS-Flip-Flop arbeitende Komparator IC1D. Der Ausgang des IC1D wird auf das GND-Bezugspotential gelegt. Damit werden über die beiden Dioden am Ausgang des IC1D unmittelbar auch dessen nicht invertierender Eingang und die Gates der FETs 3,5 auf das GND-Bezugspotential geschaltet. Beim normalen Abschaltvorgang der FETs 3,5 wird die Abschalt-Slewrate durch den Widerstand 85 begrenzt. Im Kurzschlussoder Überlastfall hingegen werden die Gates der FETS 3,5 unverzögert über Diode 87 von IC1D nach Masse gezogen. Das RS-Flip-Flop bleibt im Sperrzustand, bis keiner der beiden Komparatoren IC1A und IC1B mehr einen Überlastzustand signalisiert, und bis der Microcontroller 40 einen positiven Reset-Impuls an den nicht invertierenden Eingang des IC1D abgibt. Der Microcontroller 40 gibt solche ResetImpulse mit einer Verzögerung von ca. 0.5s bis 5s nach Auftreten eines Ausnahmezustandes (Kurzschluss, Überlast) ab und synchronisiert sie derart mit der Netzfrequenz, dass sie im Bereich des Phasen-Nulldurchgangs der Netzfrequenz liegen.

Der Microcontroller 40 umfasst vorzugsweise einen reduzierten Befehlssatz (RISC) und arbeitet bei geringer Leistungsaufnahme mit einer Taktfrequenz im Bereich von etwa 4MHz bis 40MHz.

Der Microcontroller 40 kann die Phasenlage der Netzfrequenz mittels eines Optokopplers OPTO1 erfassen, dessen beide Sendedioden antiparallel zwischen den Polleiter L1 und den Neutralleiter N1 geschaltet sind. Der Optokoppler OPTO1 steht ausgangsseitig in Wirkverbindung mit einem Eingang bzw. einem Schmitt-Trigger-Eingang des Microcontrollers 40. Vorzugsweise ist dieser Eingang ein Interrupt-Eingang, sodass der Microcontroller 40 unabhängig vom Systemtakt die Phasenlage bzw. die mit der zweifachen Netzfrequenz auftretenden Nulldurchgänge der Netzfrequenz erfassen kann. Im Bereich der Nulldurchgänge liegt die Spannung am Eingang des Microcontrollers 40 auf dem GND-Potential. Der Microcontroller 40 kann den genauen Zeitpunkt von Phasennulldurchgängen beispielsweise durch Bestimmung des Mittelwertes aus Anfangs- und Endzeitpunkt solcher Nulldurchgangs-Bereiche ermitteln.

Die Speisung 38 für die Steuerelektronik 27 funktioniert mit oder ohne zwischen den Drain-Anschluss des zweiten FET 5 und den Neutralleiter N1 geschalteter elektrischer Last 17. Die Art von Speisung 38, wie sie in Figur 6 dargestellt ist, umfasst nur wenige Bauteile und kann sehr platzsparend aufgebaut werden. Sie eignet sich als Stromversorgung für Steuerungen mit geringer Leistung, beispielsweise mit einer Stromaufnahme von etwa 1mA.

Alternativ zum Microcontroller 40 könnte der Fachmann selbstverständlich auch andere elektronische Bauteile wie beispielsweise Gate-Arrays, Prozessoren oder ASICs zur Herstellung der erfindungsgemässen Steuerung einsetzen, wobei ASICs sowohl in full- oder half-custom-Ausführung einsetzbar wären.

## Patentansprüche

1. Stellglied (1) für eine elektrische Last (17), wobei das Stellglied (1) in einem Stromkreis mit einer Wechselstromquelle (21) in Serie zur elektrischen Last (17) schaltbar ist und die Leistungsaufnahme der elektrischen Last (17) durch das Stellglied (1) steuer- und/oder schaltbar ist, **dadurch gekennzeichnet, dass** ein erster FET Transistor (3) über ein elektrisch leitendes Verbindungselement (7) antiseriell mit einem zweiten FET Transistor (5) verbunden ist.

2. Stellglied (1) nach Anspruch 1, **dadurch gekennzeichnet, dass** das Verbindungselement (7) einen Widerstand (11) oder eine Leiterbahn (13) als Widerstand (11) umfasst.

3. Stellglied (1) nach einem der Ansprüche 1 oder 2, **dadurch gekennzeichnet, dass** das Gate des ersten FET Transistors (3) elektrisch leitend mit einer Steuerspannungsquelle (31) verbunden ist, und dass das Gate des zweiten FET Transistors (5) elektrisch leitend mit einer Steuerspannungsquelle (31) verbunden ist, und/oder dass die beiden Gates elektrisch leitend miteinander verbunden sind.

4. Steuerung mit einem Stellglied (1) nach einem der Ansprüche 1 bis 3 für eine elektrische Last (17), **dadurch gekennzeichnet, dass** die Gates der beiden FET Transistoren (3,5) von einem Microcontroller (40) einer Steuerelektronik (27) ansteuerbar sind, und dass ein Spannungsabfall über dem Verbindungselement (7) von diesem Microcontroller (40) erfassbar ist.

5. Steuerung mit einem Stellglied (1) nach einem der Ansprüche 1 bis 3 für eine elektrische Last (17), **dadurch gekennzeichnet, dass** eine Speisung (38) der Steuerung einen Gleichrichter mit einer parallel zur Source-Drain-Strecke eines der FET-Transistoren (3,5) angeordneten Diode (9) umfasst.

6. Steuerung mit einem Stellglied (1) nach einem der Ansprüche 1 bis 3, **dadurch gekennzeichnet, dass** bei Schaltvorgängen der FET-Transistoren (3,5) die Slewrate durch die Slewrate begrenzende Mittel begrenzbar ist.

7. Steuerung mit einem Stellglied (1) nach einem der Ansprüche 2 oder 3, **dadurch gekennzeichnet, dass** die über dem Widerstand 11 abfallende Spannung in einer Spannungsvergleichs-Vorrichtung mit einem Vergleichs-Spannungswert vergleichbar ist.

8. Steuerung mit einem Stellglied (1) nach Anspruch 7, **dadurch gekennzeichnet, dass** die FET-Transistoren (3,5) mittels einer bistabilen Kippschaltung unabhängig von weiteren Ansteuermitteln in den Sperrzustand versetzbar sind.

9. Verfahren zum Steuern einer elektrischen Last (17) mit einer Steuerung nach einem der Ansprüche 4 bis 8, **dadurch gekennzeichnet, dass** der Status eines ersten Tasters (37a) und/oder eines zweiten Tasters (37b) durch den Microcontroller (40) überwacht wird, und dass der Microcontroller (40) bei ein- oder mehrmaliger Betätigung des jeweiligen Tasters (37a, 37b) innerhalb eines Abfrage-Zeitfensters in Abhängigkeit der Anzahl Taster-Betätigungen in diesem Abfrage-Zeitfenster unterschiedliche Aktionen ausführt.

10. Verfahren zum Steuern einer elektrischen Last (17) nach Anspruch 9, **dadurch gekennzeichnet, dass** sich beim Einsatz mindestens eines ersten Tasters (37a) und mindestens eines zweiten Tasters (37b) die Gesamtheit der durch den ersten Taster (37a) auslösbaren Aktionen von der Gesamtheit der durch den zweiten Taster (37b) auslösbaren Aktionen unterscheidet.

11. Verfahren zum Steuern einer elektrischen Last (17) nach Anspruch 9 oder 10, **dadurch gekennzeichnet, dass** die Leistung der Last (17) bei einmaliger kurzzeitiger Taster-Betätigung innerhalb des Abfrage-Zeitfensters bei gesperrtem Stellglied (1) auf einen gespeicherten Dimmwert hochgefahren und bei gedimmtem oder eingeschaltetem Stellglied (1) ausgeschaltet wird, und dass die Leistung der Last (17) bei langzeitiger einmaliger Taster-Betätigung nach Ablauf des Abfrage-Zeitfensters periodisch zwischen einem Minimalwert und einem Maximalwert verändert wird.

12. Verfahren zum Steuern einer elektrischen Last (17) nach einem der Ansprüche 9 bis 11, **dadurch gekennzeichnet, dass** die Leistungsabgabe der Last (17) bei zweimaliger kurzzeitiger Taster-Betätigung innerhalb des Abfrage-Zeitfensters bei gesperrtem oder gedimmtem Stellglied (1) auf den maximalen Dimmwert eingestellt und/oder bei maximalem Dimmwert des Stellgliedes (1) auf einen gespeicherten Dimmwert geschaltet wird.

13. Verfahren zum Steuern einer elektrischen Last (17) nach einem der Anspüche 9 bis 12, **dadurch gekennzeichnet, dass** der Microcontroller (40) bei dreimaliger Taster-Betätigung innerhalb des AbfrageZeitfensters in einen Lern-Modus wechselt, in dem durch eine oder mehrere darauf folgende Betätigungsdauern des ersten Tasters (37a) eine Hochlaufdauer und/oder eine Ablaufdauer für das Hochfahren und/oder Herunterfahren des Dimmwertes eingestellt wird.

14. Verwendung des Stellgliedes (1) nach Anspruch 1 als Überlast- und/oder Kurzschluss-Sicherung.
